# EUROPÄISCHE PATENTSCHRIFT

(11) **EP 2 619 027 B1**
(45) Veröffentlichungstag und Bekanntmachung des Hinweises auf die Patenterteilung: **31.12.2014**
(21) Anmeldenummer: 11761315.8
(22) Anmeldetag: 07.09.2011
(51) Int. Cl.: B60L 11/18, H02J 7/00, H01M 10/0525

(54) **BATTERIESYSTEM MIT VARIABEL EINSTELLBARER ZWISCHENKREISSPANNUNG**
BATTERY SYSTEM HAVING AN INTERMEDIATE CIRCUIT VOLTAGE WHICH CAN BE SET IN A VARIABLE FASHION
SYSTÈME DE BATTERIE DOTÉ D'UN CONVERTISSEUR INDIRECT DE TENSION CONTINUE À RÉGLAGE VARIABLE

(30) Priorität: 20.09.2010 DE 102010041014
(43) Veröffentlichungstag der Anmeldung: 31.07.2013
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2011/065447
(87) Internationale Veröffentlichungsnummer: WO 2012/038252

(56) Entgegenhaltungen:
- EP-A1- 2 061 116
- WO-A1-2006/079202
- US-A1- 2004 135 545
- US-A1- 2008 197 810
- LEON M TOLBERT ET AL: "Multilevel Converters for Large Electric Drives", IEEE TRANSACTIONS ON INDUSTRY APPLICATIONS, IEEE SERVICE CENTER, PISCATAWAY, NJ, US, Bd. 35, Nr. 1, 1. Februar 1999 (1999-02-01), XP011022532, ISSN: 0093-9994

## Beschreibung

Die vorliegende Erfindung betrifft ein Batteriesystem mit variabel einstellbarer Zwischenkreisspannung und ein Verfahren zum Betreiben eines solchen Batteriesystems.

### Stand der Technik

Es zeichnet sich ab, dass in Zukunft sowohl bei stationären Anwendungen als auch bei Fahrzeugen wie Hybrid- und Elektrofahrzeugen vermehrt Batteriesysteme zum Einsatz kommen werden. Um die für eine jeweilige Anwendung gegebenen Anforderungen an Spannung und zur Verfügung stellbare Leistung erfüllen zu können, werden eine hohe Zahl von Batteriezellen in Serie geschaltet. Da der von einer solchen Batterie bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen. Dies kann entweder durch Vorsehen von mehreren Zellwickeln innerhalb eines Batteriezellengehäuses oder durch externes Verschalten von Batteriezellen geschehen.

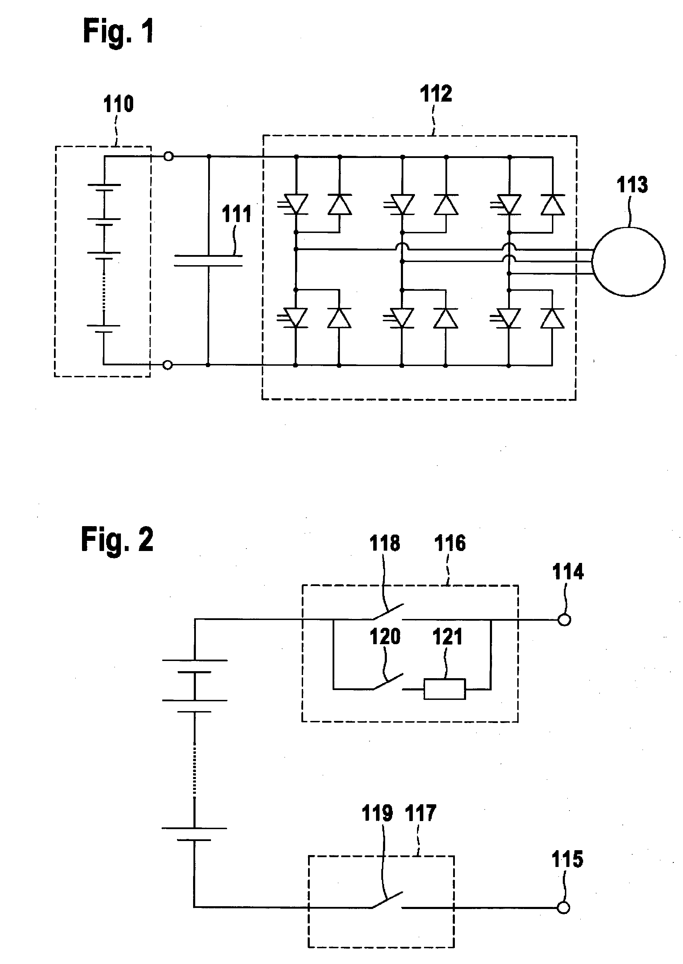

Das Prinzipschaltbild eines üblichen elektrischen Antriebssystems, wie es beispielsweise in Elektro- und Hybrid-Fahrzeugen oder auch in stationären Anwendungen wie bei der Rotorblattverstellung von Windkraftanlagen zum Einsatz kommt, ist in Figur 1 dargestellt. Eine Batterie 110 ist an einen Gleichspannungszwischenkreis angeschlossen, welcher durch einen Kondensator 111 gepuffert wird. An den Gleichspannungszwischenkreis angeschlossen ist ein Pulswechselrichter 112, der über jeweils zwei schaltbare Halbleiterventile und zwei Dioden an drei Ausgängen gegeneinander phasenversetzte Sinusspannungen für den Betrieb eines elektrischen Antriebsmotors 113 bereitstellt. Die Kapazität des Kondensators 111 muss groß genug sein, um die Spannung im Gleichspannungszwischenkreis für eine Zeitdauer, in der eines der schaltbaren Halbleiterventile durchgeschaltet wird, zu stabilisieren. In einer praktischen Anwendung wie einem Elektrofahrzeug ergibt sich eine hohe Kapazität im Bereich von mF.

Figur 2 zeigt die Batterie 110 der Figur 1 in einem detaillierteren Blockschaltbild. Eine Vielzahl von Batteriezellen sind in Serie sowie optional zusätzlich parallel geschaltet, um eine für eine jeweilige Anwendung gewünschte hohe Ausgangsspannung und Batteriekapazität zu erreichen. Zwischen den Pluspol der Batteriezellen und ein positives Batterieterminal 114 ist eine Lade- und Trenneinrichtung 116 geschaltet. Optional kann zusätzlich zwischen den Minuspol der Batteriezellen und ein negatives Batterieterminal 115 eine Trenneinrichtung 117 geschaltet werden. Die Trenn- und Ladeeinrichtung 116 und die Trenneinrichtung 117 umfassen jeweils ein Schütz 118 beziehungsweise 119, welche dafür vorgesehen sind, die Batteriezellen von den Batterieterminals abzutrennen, um die Batterieterminals spannungsfrei zu schalten. Aufgrund der hohen Gleichspannung der seriengeschalteten Batteriezellen ist andernfalls erhebliches Gefährdungspotential für Wartungspersonal oder dergleichen gegeben. In der Lade- und Trenneinrichtung 116 ist zusätzlich ein Ladeschütz 120 mit einem zu dem Ladeschütz 120 in Serie geschalteten Ladewiderstand 121 vorgesehen. Der Ladewiderstand 121 begrenzt einen Aufladestrom für den Kondensator 111, wenn die Batterie an den Gleichspannungszwischenkreis angeschlossen wird. Hierzu wird zunächst das Schütz 118 offen gelassen und nur der Ladeschütz 120 geschlossen. Erreicht die Spannung am positiven Batterieterminal 114 die Spannung der Batteriezellen, kann das Schütz 118 geschlossen und gegebenenfalls das Ladeschütz 120 geöffnet werden. Die Schütze 118, 119 und das Ladeschütz 120 erhöhen die Kosten für eine Batterie 110 nicht unerheblich, da hohe Anforderungen an ihre Zuverlässigkeit und an die von ihnen zu führenden Ströme gestellt werden.

EP 2 061 116 A1 offenbart eine Batterie aus einer Vielzahl von Batteriemodulen, bei der mittels Zellenausgleichs eine konstante Ausgangsspannung bereitgestellt wird. US 2008/0197810 A1 offenbart eine Batterie für ein Kraftfahrzeug mit einem zwischen Batterie und Motor angeordnetem Aufwärts-Frequenzumsetzer.

### Offenbarung der Erfindung

Erfindungsgemäß wird daher ein Batteriesystem mit einer Batterie, einem mit der Batterie verbundenen Gleichspannungszwischenkreis, einem mit dem Gleichspannungszwischenkreis verbundenen Wechselrichter und einem mit dem Wechselrichter verbundenen elektrischen Motor vorgeschlagen. Der Gleichspannungszwischenkreis enthält einen Kondensator und die Batterie einen Batteriemodulstrang mit einer Mehrzahl von in Serie geschalteten Batteriemodulen und eine Steuereinheit. Jedes Batteriemodul umfasst eine Koppeleinheit und wenigstens eine zwischen einen ersten Eingang und einen zweiten Eingang der Koppeleinheit geschaltete Batteriezelle. Die Koppeleinheit ist ausgebildet, auf ein erstes Steuersignal hin die wenigstens eine Batteriezelle zwischen ein erstes Terminal des Batteriemoduls und ein zweites Terminal des Batteriemoduls zu schalten und auf ein zweites Steuersignal hin das erste Terminal mit dem zweiten Terminal zu verbinden. Die Steuereinheit ist ausgebildet, das erste Steuersignal an eine variable Anzahl von Batteriemodulen des Batteriemodulsstranges und das zweite Steuersignal an die verbleibenden Batteriemodule des Batteriemodulstranges auszugeben und so eine Spannung des Gleichspannungszwischenkreises zum Antrieb des Motors variabel einzustellen.

Die Erfindung besitzt den Vorteil, dass eine Spannung des Gleichspannungszwischenkreises variabel eingestellt und so an unterschiedliche Betriebssituationen angepasst werden kann. Auf diese Weise können Drehmoment beziehungsweise Drehzahl des elektrischen Motors in einem größeren Maße unabhängig von der jeweiligen Leistung des Motors eingestellt werden. Die Spannung des Gleichspannungszwischenkreises kann so optimal für den jeweils aktuellen Betriebszustand des elektrischen Motors, z. B. in einem Antriebssystem eines Kraftfahrzeuges, eingestellt werden. Außerdem wird die Zuverlässigkeit des Batteriesystems erhöht, weil defekte Batteriemodule, also Batteriemodule, deren wenigstens eine Batteriezelle defekt ist, deaktiviert werden können. Unter Zuverlässigkeit versteht man die Fähigkeit eines Systems, für eine vorgegebene Zeit korrekt zu arbeiten. Wird ein Batteriemodul deaktiviert, steht dem Batteriesystem nicht mehr die maximal mögliche Spannung des Gleichspannungszwischenkreises zur Verfügung. Dies führt aber in einem Antriebssystem nicht zu einem Ausfall des gesamten Systems, sondern nur zu einem Betrieb mit reduzierter Leistung.

Besonders bevorzugt ist die Batterie dabei direkt mit dem Gleichspannungszwischenkreis verbunden, das heißt, es sind keine Lade- und Trenneinrichtung 116 und Trenneinrichtung 117, wie in Figur 2 gezeigt, vorgesehen. Diese Lade- und Trenneinrichtungen 16, 17 müssen hohen Anforderungen entsprechen und auch unter Last eine sichere Abtrennung der Batterie ermöglichen. Weil die Koppeleinheiten jedoch bereits eine solche Abtrennfunktion bieten, wird es möglich, die Batteriekontakte spannungsfrei zu schalten, indem die Koppeleinheiten entsprechend angesteuert werden. Aus diesem Grund ist davon auszugehen, dass die Forderung nach solchen Trenneinrichtungen nicht aufrechterhalten wird, da die erwünschte Sicherheit der Gesamtanordnung auch ohne galvanische Trennung erreicht wird. Selbst eine fehlerhafte Serienschaltung von mehreren Halbleiterschaltern in den Koppeleinheiten, beispielsweise aufgrund eines Durchlegierens von pn-Übergängen, kann nicht dazu führen, dass unzulässig hohe Spannungen an den Anschlüssen der Batterie anliegen.

Um die Betriebssicherheit zu erhöhen, kann bei einer Ausführungsvariante des Batteriesystems wenigstens eine der Koppeleinheiten des Batteriemodulstranges ausgebildet sein, das erste Terminal des jeweiligen Batteriemoduls vom zweiten Terminal auf ein drittes Steuersignal hin voneinander und von der wenigstens einen Batteriezelle abzutrennen. Hierbei wird das Batteriemodul mit der Koppeleinheit hochohmig geschaltet, das heißt, es werden beide Pole des Batteriemoduls elektrisch nicht leitend geschaltet und somit abgekoppelt. In Kombination mit der vorhergehenden Ausführungsform kann die Sicherheit weiter erhöht werden, weil bis zur doppelten Anzahl Schalter sperrend geschaltet sein kann. Dieses Merkmal der Ausführungsform der Erfindung kann aber auch unabhängig von Sicherheitsaspekten verwirklicht werden.

Die Koppeleinheit kann einen ersten Ausgang aufweisen und ausgebildet sein, auf das erste Steuersignal hin entweder den ersten Eingang oder den zweiten Eingang mit dem Ausgang zu verbinden. Der Ausgang ist dabei mit einem der Terminals des Batteriemoduls und einer von erstem oder zweitem Eingang mit dem anderen der Terminals des Batteriemoduls verbunden. Eine solche Koppeleinheit kann mit dem Einsatz von nur zwei Schaltern, bevorzugt Halbleiterschaltern wie MOSFETs oder IGBTs, realisiert werden.

Alternativ kann die Koppeleinheit einen ersten Ausgang und einen zweiten Ausgang aufweisen und ausgebildet sein, auf das erste Steuersignal hin den ersten Eingang mit dem ersten Ausgang und den zweiten Eingang mit dem zweiten Ausgang zu verbinden. Dabei ist die Koppeleinheit außerdem ausgebildet, auf das zweite Steuersignal hin den ersten Eingang vom ersten Ausgang und den zweiten Eingang vom zweiten Ausgang abzutrennen und den ersten Ausgang mit dem zweiten Ausgang zu verbinden. Diese Ausführungsform benötigt einen etwas höheren Schaltungsaufwand (gewöhnlich drei Schalter), , koppelt aber die Batteriezellen des Batteriemoduls an dessen beiden Polen ab, so dass bei einer drohenden Tiefentladung oder einer Beschädigung eines Batteriemoduls dessen Batteriezellen spannungsfrei geschaltet und so im fortwährenden Betrieb der Gesamtanordnung gefahrlos ausgetauscht werden können.

Die Steuereinheit kann eine Batteriezelldiagnoseeinheit enthalten, die mit den Batteriezellen der Batteriemodule verbunden oder verbindbar ist. Die Batteriezelldiagnoseeinheit ist dabei ausgebildet, einen Alterungszustand der Batteriezellen zu bestimmen. Die Steuereinheit ist dann ausgebildet, das zweite Steuersignal an Batteriemodule auszugeben, für deren Batteriezellen die Batteriezelldiagnoseeinheit einen Alterungszustand bestimmt hat, der größer als ein vorbestimmter maximaler Alterungszustand ist. Die Batteriezelldiagnoseeinheit kann beliebige bekannte Diagnoseverfahren anwenden, um den Alterungszustand einer Batteriezelle oder einer Gruppe von Batteriezellen zu bestimmen. So können charakteristische Parameter der Batteriezellen wie Zellspannung, Zelltemperatur, Batteriestrom, dynamische Änderung der Zellspannung bei Lastwechsel und dergleichen erfasst und ausgewertet werden. Übertrifft der für eine Batteriezelle oder mehrere Batteriezellen eines Batteriemoduls festgestellte Alterungszustand den vorbestimmten maximalen Alterungszustand, wird das Batteriemodul inaktiv geschaltet, seine Ausgänge also überbrückt. Dies kann vorteilhaft im Rahmen eines Cell-Balancings oder aber zum Schutz der Batteriezellen vor Tiefentladung eingesetzt werden.

Besonders bevorzugt sind die Batteriezellen Lithium-Ionen-Batteriezellen. Lithium-Ionen-Batteriezellen besitzen die Vorteile einer hohen Zellspannung und eines hohen Energiegehaltes in einem gegebenen Volumen.

Ein zweiter Aspekt der Erfindung betrifft ein Kraftfahrzeug mit einem Batteriesystem gemäß dem ersten Erfindungsaspekt, bei dem der elektrische Motor ausgebildet ist, das Kraftfahrzeug anzutreiben.

Ein dritter Aspekt der Erfindung führt ein Verfahren zum Betreiben eines Batteriesystems mit einer Batterie, einem mit der Batterie verbundenen Gleichspannungszwischenkreis, einem mit dem Gleichspannungszwischenkreis verbundenen Wechselrichter und einem mit dem Wechselrichter verbundenen elektrischen Motor ein. Die Batterie enthält dabei eine Mehrzahl von Batteriezellen. Das Verfahren weist wenigstens die folgenden Schritte auf: Abkoppeln einer Anzahl von Batteriezellen; Überbrücken der Anzahl von Batteriezellen; und Serienschalten der verbleibenden Batteriezellen, so dass eine Spannung des Gleichspannungszwischenkreises zum Antrieb des Motors variabel eingestellt wird.

Das Verfahren kann zusätzliche Schritte des Bestimmens eines Alterungszustandes der Batteriezellen und des Vergleichens der Alterungszustände der Batteriezellen mit einem vorgegebenen maximalen Alterungszustand enthalten, wobei die Anzahl von Batteriezellen genau diejenigen Batteriezellen umfasst, deren Alterungszustand größer als der maximale Alterungszustand ist.

### Zeichnungen

Ausführungsbeispiele der Erfindung werden anhand der Zeichnungen und der nachfolgenden Beschreibung näher erläutert, wobei gleiche Bezugszeichen gleiche oder funktional gleichartige Komponenten bezeichnen. Es zeigen:
Figur 1 ein elektrisches Antriebssystem gemäß dem Stand der Technik,
Figur 2 ein Blockschaltbild einer Batterie gemäß dem Stand der Technik,
Figur 3 eine erste Ausführung einer Koppeleinheit zum Einsatz in der erfindungsgemäßen Batterie,
Figur 4 eine mögliche schaltungstechnische Umsetzung der ersten Ausführungsform der Koppeleinheit,
Figuren 5A und 5B zwei Ausführungsformen eines Batteriemoduls mit der ersten Ausführungsform der Koppeleinheit,
Figur 6 eine zweite Ausführungsform einer Koppeleinheit zum Einsatz in der erfindungsgemäßen Batterie,
Figur 7 eine mögliche schaltungstechnische Umsetzung der zweiten Ausführungsform der Koppeleinheit,
Figur 8 eine Ausführungsform eines Batteriemoduls mit der zweiten Ausführungsform der Koppeleinheit, und
Figur 9 eine Batterie für den Einsatz in dem erfindungsgemäßen Batteriesystem.

### Ausführungsformen der Erfindung

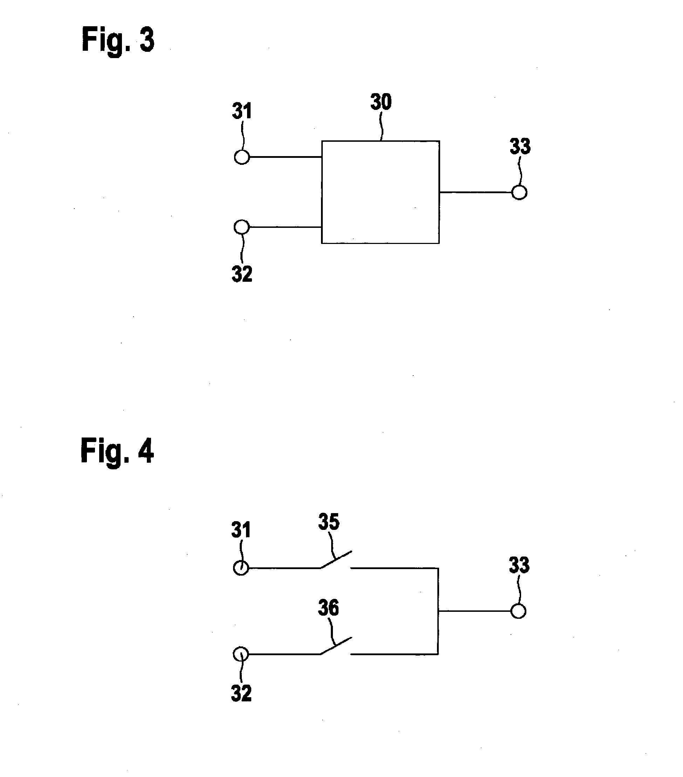

Figur 3 zeigt eine erste Ausführung einer Koppeleinheit 30 zum Einsatz in dem erfindungsgemäßen Batteriesystem. Die Koppeleinheit 30 besitzt zwei Eingänge 31 und 32 sowie einen Ausgang 33 und ist ausgebildet, einen der Eingänge 31 oder 32 mit dem Ausgang 33 zu verbinden und den anderen abzukoppeln.

Figur 4 zeigt eine mögliche schaltungstechnische Umsetzung der ersten Ausführungsform der Koppeleinheit 30, bei der ein erster und ein zweiter Schalter 35 beziehungsweise 36 vorgesehen sind. Jeder der Schalter 35, 36 ist zwischen einen der Eingänge 31 beziehungsweise 32 und den Ausgang 33 geschaltet. Diese Ausführungsform bietet den Vorteil, dass auch beide Eingänge 31, 32 vom Ausgang 33 abgekoppelt werden können, so dass der Ausgang 33 hochohmig wird, was beispielsweise im Fall einer Reparatur oder Wartung nützlich sein kann. Zudem können die Schalter 35, 36 einfach als Halbleiterschalter wie z. B. MOSFETs oder IGBTs verwirklicht werden. Halbleiterschalter haben den Vorteil eines günstigen Preises und einer hohen Schaltgeschwindigkeit, so dass die Koppeleinheit 30 innerhalb einer geringen Zeit auf ein Steuersignal beziehungsweise eine Änderung des Steuersignals reagieren kann.

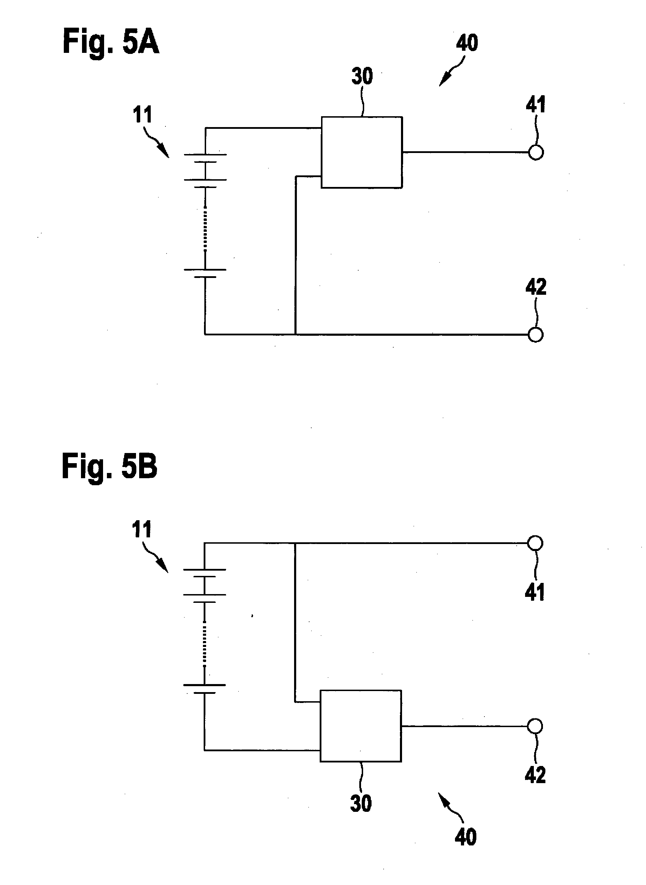

Die Figuren 5A und 5B zeigen zwei Ausführungsformen eines Batteriemoduls 40 mit der ersten Ausführungsform der Koppeleinheit 30. Eine Mehrzahl von Batteriezellen 11 ist zwischen die Eingänge der Koppeleinheit 30 in Serie geschaltet. Die Erfindung ist jedoch nicht auf eine solche Serienschaltung von Batteriezellen 11 beschränkt, es kann auch nur eine einzelne Batteriezelle 11 vorgesehen sein oder aber eine Parallelschaltung oder gemischt-seriell-parallele Schaltung von Batteriezellen 11. Im Beispiel der Figur 5A sind der Ausgang der Koppeleinheit 30 mit einem ersten Terminal 41 und der negative Pol der Batteriezellen 11 mit einem zweiten Terminal 42 verbunden. Es ist jedoch eine beinahe spiegelbildliche Anordnung wie in Figur 5B möglich, bei der der positive Pol der Batteriezellen 11 mit dem ersten Terminal 41 und der Ausgang der Koppeleinheit 30 mit dem zweiten Terminal 42 verbunden sind.

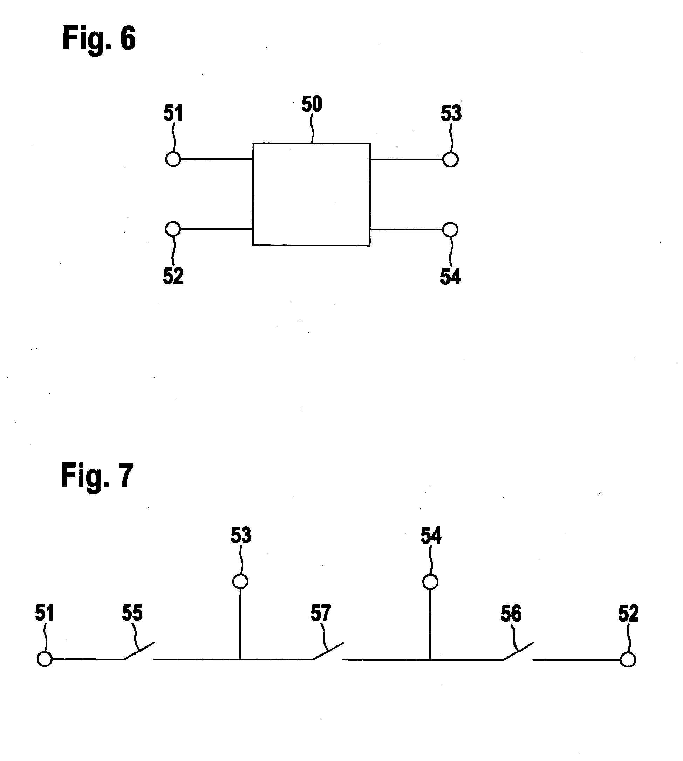

Figur 6 zeigt eine zweite Ausführungsform einer Koppeleinheit 50 zum Einsatz in dem erfindungsgemäßen Batteriesystem. Die Koppeleinheit 50 besitzt zwei Eingänge 51 und 52 sowie zwei Ausgänge 53 und 54. Sie ist ausgebildet, entweder den ersten Eingang 51 mit dem ersten Ausgang 53 sowie den zweiten Eingang 52 mit dem zweiten Ausgang 54 zu verbinden (und den ersten Ausgang 53 vom zweiten Ausgang 54 abzukoppeln) oder aber den ersten Ausgang 53 mit dem zweiten Ausgang 54 zu verbinden (und dabei die Eingänge 51 und 52 abzukoppeln). Bei bestimmten Ausführungsformen der Koppeleinheit 50 kann diese außerdem ausgebildet sein, beide Eingänge 51, 52 von den Ausgängen 53, 54 abzutrennen und auch den ersten Ausgang 53 vom zweiten Ausgang 54 abzukoppeln. Nicht vorgesehen ist jedoch, sowohl den ersten Eingang 51 mit dem zweiten Eingang 52 zu verbinden.

Figur 7 zeigt eine mögliche schaltungstechnische Umsetzung der zweiten Ausführungsform der Koppeleinheit 50, bei der ein erster, ein zweiter und ein dritter Schalter 55, 56 und 57 vorgesehen sind. Der erste Schalter 55 ist zwischen den ersten Eingang 51 und den ersten Ausgang 53 geschaltet, der zweite Schalter 56 ist zwischen den zweiten Eingang 52 und den zweiten Ausgang 54 und der dritte Schalter 57 zwischen den ersten Ausgang 53 und den zweiten Ausgang 54 geschaltet. Diese Ausführungsform bietet ebenfalls den Vorteil, dass die Schalter 55, 56 und 57 einfach als Halbleiterschalter wie z. B. MOSFETs oder IGBTs verwirklicht werden können. Halbleiterschalter haben den Vorteil eines günstigen Preises und einer hohen Schaltgeschwindigkeit, so dass die Koppeleinheit 50 innerhalb einer geringen Zeit auf ein Steuersignal beziehungsweise eine Änderung des Steuersignals reagieren kann.

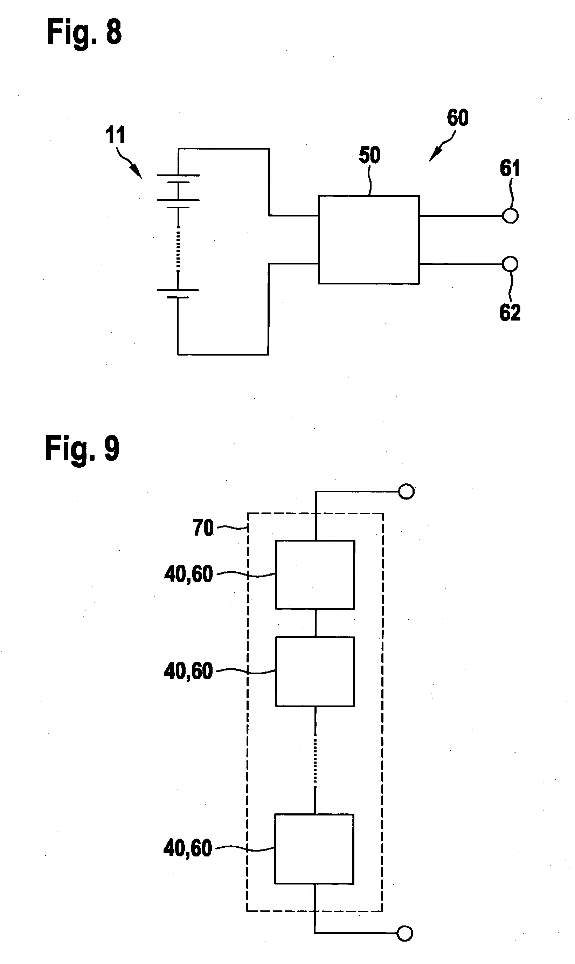

Die Figur 8 zeigt eine Ausführungsform eines Batteriemoduls 60 mit der zweiten Ausführungsform der Koppeleinheit 50. Eine Mehrzahl von Batteriezellen 11 ist zwischen die Eingänge einer Koppeleinheit 50 in Serie geschaltet. Auch diese Ausführungsform des Batteriemoduls 60 ist nicht auf eine solche Serienschaltung von Batteriezellen 11 beschränkt, es kann wiederum auch nur eine einzelne Batteriezelle 11 vorgesehen sein oder aber eine Parallelschaltung oder gemischt-seriell-parallele Schaltung von Batteriezellen 11. Der erste Ausgang der Koppeleinheit 50 ist mit einem ersten Terminal 61 und der zweite Ausgang der Koppeleinheit 50 ist mit einem zweiten Terminal 62 verbunden. Das Batteriemodul 60 bietet gegenüber dem Batteriemodul 40 der Figuren 5A und 5B den Vorteil, dass die Batteriezellen 11 durch die Koppeleinheit 50 von der restlichen Batterie beidseitig abgekoppelt werden können, was einen gefahrlosen Austausch im laufenden Betrieb ermöglicht, da an keinem Pol der Batteriezellen 11 die gefährliche hohe Summenspannung der restlichen Batteriemodule der Batterie anliegt.

Figur 9 zeigt eine Ausführungsform der Batterie des erfindungsgemäßen Batteriesystems. Die Batterie weist einen Batteriemodulstrang 70 mit einer Mehrzahl von Batteriemodulen 40 oder 60 auf, wobei vorzugsweise jedes Batteriemodul 40 oder 60 dieselbe Anzahl von Batteriezellen 11 in identischer Weise verschaltet enthält. Generell kann der Batteriemodulstrang 70 jede Zahl von Batteriemodulen 40 oder 60 größer 1 enthalten. Auch können an den Polen des Batteriemodulstranges 70 zusätzlich Lade- und Trenneinrichtungen und Trenneinrichtungen wie bei Figur 2 vorgesehen sein, wenn Sicherheitsbestimmungen dies erfordern. Allerdings sind solche Trenneinrichtungen erfindungsgemäß nicht notwendig, weil eine Abkopplung der Batteriezellen 11 von den Batterieanschlüssen durch die in den Batteriemodulen 40 oder 60 enthaltenen Koppeleinheiten 30 oder 50 erfolgen kann.

Die Erfindung besitzt außer den bereits genannten Vorteilen den weiteren Vorteil, dass sie sehr einfach modular aus einzelnen Batteriemodulen mit integrierter Koppeleinheit aufgebaut werden kann. Dadurch wird die Verwendung von Gleichteilen (Baukastenprinzip) möglich.

## Patentansprüche

1. Ein Batteriesystem mit einer Batterie, einem mit der Batterie verbundenen Gleichspannungszwischenkreis, einem mit dem Gleichspannungszwischenkreis verbundenen Wechselrichter und einem mit dem Wechselrichter verbundenen elektrischen Motor, wobei der Gleichspannungszwischenkreis einen Kondensator und die Batterie einen Batteriemodulstrang (70) mit einer Mehrzahl von in Serie geschalteten Batteriemodulen (40, 60) und eine Steuereinheit enthält, jedes Batteriemodul (40, 60) eine Koppeleinheit (30, 50) und wenigstens eine zwischen einen ersten Eingang (31, 51) und einen zweiten Eingang (32, 52) der Koppeleinheit (30, 50) geschaltete Batteriezelle (11) umfassend, und wobei die Koppeleinheit (30, 50) ausgebildet ist, auf ein erstes Steuersignal hin die wenigstens eine Batteriezelle (11) zwischen ein erstes Terminal (41, 61) des Batteriemoduls (40, 60) und ein zweites Terminal (42, 62) des Batteriemoduls (40, 60) zu schalten und auf ein zweites Steuersignal hin das erste Terminal (41, 61) mit dem zweiten Terminal (42, 62) zu verbinden, **dadurch gekennzeichnet, dass** die Steuereinheit ausgebildet ist, das erste Steuersignal an eine variable Anzahl von Batteriemodulen (40, 60) des Batteriemodulsstranges (70) und das zweite Steuersignal an die verbleibenden Batteriemodule (40, 60) des Batteriemodulstranges (70) auszugeben und so eine Spannung des Gleichspannungszwischenkreises zum Antrieb des Motors variabel einzustellen.

2. Das Batteriesystem gemäß Anspruch 1, bei dem die Batterie direkt mit dem Gleichspannungszwischenkreis verbunden ist.

3. Das Batteriesystem gemäß einem der Ansprüche 1 oder 2, bei dem wenigstens eine der Koppeleinheiten (30, 50) des Batteriemodulstranges (70) ausgebildet ist, das erste Terminal (41, 61) des jeweiligen Batteriemoduls (40, 60) vom zweiten Terminal (42, 62) auf ein drittes Steuersignal hin voneinander und von der wenigstens einen Batteriezelle (11) abzutrennen.

4. Das Batteriesystem gemäß einem der vorhergehenden Ansprüche, bei dem die Koppeleinheit (30) einen ersten Ausgang (33) aufweist und ausgebildet ist, auf das erste Steuersignal hin entweder den ersten Eingang (31) oder den zweiten Eingang (32) mit dem ersten Ausgang (33) zu verbinden.

5. Das Batteriesystem gemäß einem der Ansprüche 1 bis 4, bei dem die Koppeleinheit (50) einen ersten Ausgang (53) und einen zweiten Ausgang (54) aufweist und ausgebildet ist, auf das erste Steuersignal hin den ersten Eingang (51) mit dem ersten Ausgang (53) und den zweiten Eingang (52) mit dem zweiten Ausgang (54) zu verbinden und auf das zweite Steuersignal hin den ersten Eingang (51) vom ersten Ausgang (53) und den zweiten Eingang (52) vom zweiten Ausgang (54) abzutrennen und den ersten Ausgang (53) mit dem zweiten Ausgang (54) zu verbinden.

6. Das Batteriesystem gemäß einem der vorhergehenden Ansprüche, bei dem die Steuereinheit eine Batteriezelldiagnoseeinheit enthält, die mit den Batteriezellen (11) der Batteriemodule (40, 60) verbunden oder verbindbar und ausgebildet ist, einen Alterungszustand der Batteriezellen (11) zu bestimmen, wobei die Steuereinheit ausgebildet ist, das zweite Steuersignal an Batteriemodule (40, 60) auszugeben, für deren Batteriezellen (11) die Batteriezelldiagnoseeinheit einen Alterungszustand bestimmt hat, der größer als ein vorbestimmter maximaler Alterungszustand ist.

7. Das Batteriesystem gemäß einem der vorhergehenden Ansprüche, bei dem die Batteriezellen (11) Lithium-Ionen-Batteriezellen sind.

8. Ein Kraftfahrzeug mit einem Batteriesystem gemäß einem der vorhergehenden Ansprüche, bei dem der elektrische Motor ausgebildet ist, das Kraftfahrzeug anzutreiben.

9. Ein Verfahren zum Betreiben eines Batteriesystems mit einer Batterie, einem mit der Batterie verbundenen Gleichspannungszwischenkreis, einem mit dem Gleichspannungszwischenkreis verbundenen Wechselrichter und einem mit dem Wechselrichter verbundenen elektrischen Motor, wobei die Batterie eine Mehrzahl von Batteriezellen (11) enthält, mit den folgenden Schritten:
Abkoppeln einer Anzahl von Batteriezellen (11);
Überbrücken der Anzahl von Batteriezellen (11); und
Serienschalten der verbleibenden Batteriezellen (11),
so dass eine Spannung des Gleichspannungszwischenkreises zum Antrieb des Motors variabel eingestellt wird.

10. Das Verfahren gemäß dem vorhergehenden Anspruch, mit zusätzlichen Schritten des Bestimmens eines Alterungszustandes der Batteriezellen (11) und des Vergleichens der Alterungszustände der Batteriezellen (11) mit einem vorgegebenen maximalen Alterungszustand, wobei die Anzahl von Batteriezellen (11) genau diejenigen Batteriezellen (11) umfasst, deren Alterungszustand größer als der maximale Alterungszustand ist.

## Claims

1. Battery system having a battery, a DC voltage intermediate circuit that is connected to the battery, an AC converter that is connected to the DC voltage intermediate circuit, and an electric motor that is connected to the AC converter, wherein the DC voltage intermediate circuit comprises a capacitor and the battery comprises a battery module string (70) having a plurality of battery modules (40, 60) that are connected in series, and a control unit, each battery module (40, 60) comprising a coupling unit (30, 50) and at least one battery cell (11) that is connected between a first input (31, 51) and a second input (32, 52) of the coupling unit (30, 50) and wherein the coupling unit (30, 50) is embodied to switch the at least one battery cell (11) between a first terminal (41, 61) of the battery module (40, 60) and a second terminal (42, 62) of the battery module (40, 60) in response to a first control signal and in response to a second control signal to connect the first terminal (41, 61) to the second terminal (42, 62), **characterized in that** the control unit is embodied to transmit the first control signal to a variable number of battery modules (40, 60) of the battery module string (70) and to transmit the second control signal to the remaining battery modules (40, 60) of the battery module string (70) and thus to set a voltage of the DC voltage intermediate circuit for driving the motor in a variable manner.

2. Battery system according to Claim 1, wherein the battery is connected directly to the DC intermediate circuit.

3. Battery system according to any one of Claims 1 or 2, wherein at least one of the coupling units (30, 50) of the battery module string (70) is embodied to disconnect the first terminal (41, 61) of the respective battery module (40, 60) from the second terminal (42, 62) in response to a third control signal from each other and from the at least one battery cell (11).

4. Battery system according to any one of the preceding claims, wherein the coupling unit (30) comprises a first output (33) and is embodied to connect either the first input (31) or the second input (32) to the first output (33) in response to the first control signal.

5. Battery system according to any one of the preceding Claims 1 to 4, wherein the coupling unit (50) comprises a first output (53) and a second output (54) and is embodied to connect the first input (51) to the first output (53) and the second input (52) to the second output (54) in response to the first control signal and in response to the second control signal to disconnect the first input (51) from the first output (53) and the second input (52) from the second output (54) and to connect the first output (53) to the second output (54).

6. Battery system according to any one of the preceding claims, wherein the control unit comprises a battery cell diagnostic unit that is connected or can be connected to the battery cells (11) of the battery modules (40, 60) and that is embodied to determine a state of aging of the battery cells (11), wherein the control unit is embodied to transmit the second control signal to the battery modules (40, 60) for whose battery cells (11) the battery cell diagnostic unit has determined the state of aging to be greater than a predetermined maximum state of aging.

7. Battery system according to any one of the preceding claims, wherein the battery cells (11) are lithium-ion battery cells.

8. Motor vehicle having a battery system according to any one of the preceding claims, wherein the electric motor is embodied to drive the motor vehicle.

9. Method for operating a battery system having a battery, a DC voltage intermediate circuit that is connected to the battery, an AC converter that is connected to the DC voltage intermediate circuit, and an electric motor that is connected to the AC converter, wherein the battery comprises a plurality of battery cells (11), which method comprises the following steps:
disconnect a number of battery cells (11);
bridge the number of battery cells (11); and
connect in series the remaining battery cells (11),
so that a voltage of the DC voltage intermediate circuit for driving the motor is set in a variable manner.

10. Method according to the preceding claim, having the additional steps of determining a state of aging of the battery cells (11) and comparing the various states of aging of the battery cells (11) with a predetermined maximum state of aging, wherein the number of battery cells (11) comprises precisely those battery cells (11) whose state of aging is greater than the maximum state of aging.

## Revendications

1. Système de batterie comprenant une batterie, un circuit intermédiaire de tension continue connecté à la batterie, un onduleur connecté au circuit intermédiaire de tension continue et un moteur électrique connecté à l'onduleur, le circuit intermédiaire de tension continue contenant un condensateur et la batterie contenant un tronçon modulaire de batterie (70) avec une pluralité de modules de batterie (40, 60) montés en série et une unité de commande, chaque module de batterie (40, 60) comprenant une unité d'accouplement (30, 50) et au moins une cellule de batterie (11) commutée entre une première entrée (31, 51) et une deuxième entrée (32, 52) de l'unité d'accouplement (30, 50), et l'unité d'accouplement (30, 50) étant réalisée, en réponse à un premier signal de commande, de manière à commuter l'au moins une cellule de batterie (11) entre une première borne (41, 61) du module de batterie (40, 60) et une deuxième borne (42, 62) du module de batterie (40, 60) et en réponse à un deuxième signal de commande, de manière à connecter la première borne (41, 61) à la deuxième borne (42, 62), **caractérisé en ce que** l'unité de commande est réalisée pour émettre le premier signal de commande au niveau d'un nombre variable de modules de batterie (40, 60) du tronçon modulaire de batterie (70) et le deuxième signal de commande au niveau des modules • de batterie restants (40, 60) du tronçon modulaire de batterie (70) et pour ainsi ajuster de manière variable une tension du circuit intermédiaire de tension continue en vue de l'entraînement du moteur.

2. Système de batterie selon la revendication 1, dans lequel la batterie est connectée directement au circuit intermédiaire de tension continue.

3. Système de batterie selon l'une quelconque des revendications 1 ou 2, dans laquelle au moins l'une des unités d'accouplement (30, 50) du tronçon modulaire de batterie (70) est réalisé, en réponse à un troisième signal de commande, de manière à séparer l'une de l'autre la première borne (41, 61) du module de batterie respectif (40, 60) de la deuxième borne (42, 62) et de l'au moins une cellule de batterie (11).

4. Système de batterie selon l'une quelconque des revendications précédentes, dans lequel l'unité d'accouplement (30) présente une première sortie (33) et est réalisée de manière à connecter, en réponse au premier signal de commande, soit la première entrée (31) soit la deuxième entrée (32) à la première sortie (33).

5. Système de batterie selon l'une quelconque des revendications 1 à 4, dans lequel l'unité d'accouplement (50) présente une première sortie (53) et une deuxième sortie (54) et est réalisée, en réponse au premier signal de commande, de manière à connecter la première entrée (51) à la première sortie (53) et la deuxième entrée (52) à la deuxième sortie (54) et en réponse au deuxième signal de commande, de manière à séparer la première entrée (51) de la première sortie (53) et la deuxième entrée (52) de la deuxième sortie (54) • et de manière à connecter la première sortie (53) à la deuxième sortie (54).

6. Système de batterie selon l'une quelconque des revendications précédentes, dans lequel l'unité de commande contient une unité de diagnostic de cellules de batterie qui est connectée ou qui peut être connectée aux cellules de batterie (11) des modules de batterie (40, 60) et qui est réalisée de manière à déterminer un état de vieillissement des cellules de batterie (11), l'unité de commande étant réalisée de manière à émettre le deuxième signal de commande au niveau des modules de batterie (40, 60) pour les cellules de batterie (11) desquels l'unité de diagnostic de cellules de batterie a déterminé un état de vieillissement qui est supérieur à un état de vieillissement maximum prédéterminé.

7. Système de batterie selon l'une quelconque des revendications précédentes, dans lequel les cellules de batterie (11) sont des cellules de batterie lithium-ion.

8. Véhicule automobile comprenant un système de batterie selon l'une quelconque des revendications précédentes, dans lequel le moteur électrique est réalisé de manière à entraîner le véhicule automobile.

9. Procédé pour faire fonctionner un système de batterie comprenant une batterie, un circuit intermédiaire de tension continue connecté à la batterie, un onduleur connecté au circuit intermédiaire de tension continue et un moteur électrique connecté à l'onduleur, la batterie contenant une pluralité de cellules de batterie (11), comprenant les étapes suivantes consistant à • désaccoupler une pluralité de cellules de batterie (11) ;
contourner la pluralité de cellules de batterie (11) ; et
brancher en série les cellules de batterie restante (11),
de telle sorte qu'une tension du circuit intermédiaire de tension continue soit ajustée de manière variable pour l'entraînement du moteur.

10. Procédé selon la revendication précédente, comprenant les étapes supplémentaires consistant à déterminer un état de vieillissement des cellules de batterie (11) et à comparer les états de vieillissement des cellules de batterie (11) à un état de vieillissement maximum prédéfini, le nombre de cellules de batterie (11) comprenant exactement les cellules de batterie (11) dont l'état de vieillissement est supérieur à l'état de vieillissement maximal.
